# EUROPEAN PATENT SPECIFICATION

(11) **EP 3 098 401 B1**
(45) Date of publication and mention of the grant of the patent: **31.01.2018**
(21) Application number: 16171221.1
(22) Date of filing: 25.05.2016
(51) Int. Cl.: F01K 21/04

(54) **ADVANCED HUMID AIR TURBINE SYSTEM AND EXHAUST GAS TREATMENT SYSTEM**
VERBESSERTES FEUCHTLUFTTURBINENSYSTEM UND ABGASBEHANDLUNGSSYSTEM
SYSTÈME DE TURBINE À AIR HUMIDE AVANCÉE ET SYSTÈME DE TRAITEMENT DE GAZ D'ÉCHAPPEMENT

(30) Priority: 25.05.2015 JP 2015105479
(43) Date of publication of application: 30.11.2016
(73) Proprietor: Mitsubishi Hitachi Power Systems, Ltd., Nishi-ku Yokohama 220-8401 (JP)
(72) Inventor: SATO, Kazuhiko, Yokohama, 220-8401 (JP)
(74) Representative: MERH-IP Matias Erny Reichl Hoffmann Patentanwälte PartG mbB

(56) References cited:
- EP-A2- 1 741 900
- JP-A- H11 257 006
- JP-A- 2001 115 855
- JP-A- 2001 214 754
- JP-A- 2009 264 348
- JP-A- 2012 144 987

## Description

### BACKGROUND OF THE INVENTION

### 1. Field of the Invention

The present invention relates to an advanced humid air turbine system and an exhaust gas treatment system therefor.

### 2. Description of Related Art

There have been known advanced humid air turbine systems for introducing water or steam into a gas turbine to increase the flow rate of a working fluid, as gas turbine systems which are capable of increasing output and enhancing electric generation efficiency. The conventional advanced humid air turbine systems tend to emit plume consisting of steam under some circumstances when the exhaust gas containing high moisture is discharged from a stack. However, since the plume degrades aesthetic appearances, there has been a demand for the discharging of an exhaust gas without producing plume.

JP-2007-2768-A discloses an advanced humid air turbine system that is able to discharge an exhaust gas without producing plume. The advanced humid air turbine system includes a gas turbine having a compressor, a combustor, and a turbine, a humidification tower for humidifying compressed air from the compressor, a recuperator for exchanging heat between an exhaust gas discharged from the turbine and the compressed air supplied from the humidification tower to the combustor, an economizer for exchanging heat between humidification water to be supplied to the humidification tower and the exhaust gas discharged from the recuperator, a water recovery unit for recovering water that is contained in the exhaust gas from the economizer, and an exhaust gas reheater for heating the exhaust gas from the water recovery unit. The advanced humid air turbine system employs the humidification water to be supplied to the humidification tower, which has been taken out at the outlet of the economizer, as a heat source for heating the exhaust gas in the exhaust gas reheater.

JP 2001 115855 A discloses a gas turbine system that comprises an air compressor, a humidifying device, a combustor, a gas turbine, a feed water heater heat exchanging between exhaust gas discharged from the gas turbine and water guided to the humidifying device, a water recovering apparatus to recover a moisture content from exhaust gas flowing through the feed water heater, and a heat exchanger heat exchanging between exhaust gas through the water recovering apparatus and compressed air from the compressor.

### SUMMARY OF THE INVENTION

Because the advanced humid air turbine system disclosed in JP-2007-2768-A employs the humidification water whose temperature has been raised by the heat exchange with the exhaust gas in the economizer, as a heating source of the exhaust gas reheater, part of the heat energy recovered by the economizer is discharged together with the exhaust gas out of the system. The heat energy discharged together with the exhaust gas out of the system should normally be supplied again to the gas turbine, and hence causes a heat loss for the advanced humid air turbine system as a whole.

The present invention has been made to solve the foregoing problem and an object of the present invention to provide an advanced humid air turbine system and an exhaust gas treatment system for the advanced humid air turbine system which prevent plume from being produced and reduce a heat loss caused therefor.

To solve the foregoing problem, the present invention incorporates configurations as defined in the appended claims.

This application includes a plurality of means for solving the foregoing problem. In one aspect, the present invention provides an exhaust gas treatment system for an advanced humid air turbine system, for treating a moisture contained in an exhaust gas discharged from a gas turbine system in which a working fluid is humidified. The exhaust gas treatment system includes a water recovery unit for recovering the moisture contained in the exhaust gas by cooling the exhaust gas discharged from the gas turbine system with a coolant, and an exhaust gas reheater disposed downstream of the water recovery unit with respect to the flow of the exhaust gas, for heating the exhaust gas that has passed through the water recovery unit with a heat medium. In the exhaust gas treatment system, the coolant that has exchanged heat with the exhaust gas in the water recovery unit is used as the heat medium for the exhaust gas reheater.

In the aspect of the present invention, the exhaust gas is heated by the exhaust gas reheater using the coolant that has exchanged heat with the exhaust gas in the water recovery unit, i.e., the heat energy recovered from the exhaust gas by the water recovery unit. It is not necessary to use heat energy to be supplied again to the gas turbine system as a heating source for the exhaust gas reheater. Accordingly, the heat loss of the overall system can be reduced while preventing the system from producing plume.

Problems, configurations, and effects other than those described above will be readily understood by the following detailed description of embodiments in conjunction with the accompanying drawings.

### BRIEF DESCRIPTION OF THE DRAWINGS

FIG. 1 is a configuration diagram of an advanced humid air turbine system and an exhaust gas treatment system according to a first embodiment of the present invention;
FIG. 2 is a characteristic diagram showing a transition of temperature and absolute humidity of an exhaust gas of the advanced humid air turbine system and the exhaust gas treatment system according to the first embodiment of the present invention;
FIG. 3 is a configuration diagram of an advanced humid air turbine system and an exhaust gas treatment system according to a modification of the first embodiment of the present invention;
FIG. 4 is a configuration diagram of an advanced humid air turbine system and an exhaust gas treatment system according to a second embodiment of the present invention;
FIG. 5 is a configuration diagram of an advanced humid air turbine system and an exhaust gas treatment system according to a modification of the second embodiment of the present invention; and
FIG. 6 is a configuration diagram of an advanced humid air turbine system and an exhaust gas treatment system according to a third embodiment of the present invention.

### DESCRIPTION OF THE PREFERRED EMBODIMENTS

Advanced humid air turbine systems and exhaust gas treatment systems according to preferred embodiment of the present invention will be described in detail below with reference to the drawings.

### FIRST EMBODIMENT

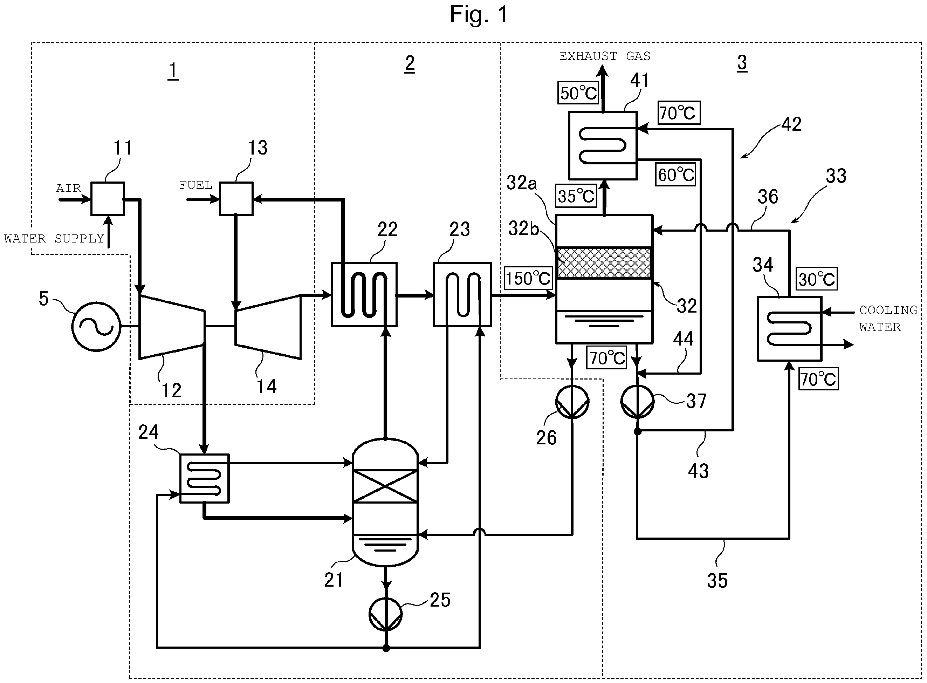

A system configuration of an advanced humid air turbine system and an exhaust gas treatment system according to a first embodiment of the present invention will first be described below with reference to FIG. 1.

FIG. 1 is a configuration diagram of the advanced humid air turbine system and the exhaust gas treatment system according to the first embodiment of the present invention. In FIG. 1, the arrows represent the directions of flows of a working fluid, an exhaust gas, introduced water, and recovery water, etc. in the advanced humid air turbine system.

As shown in FIG. 1, the advanced humid air turbine system includes a gas turbine system 1, a humidification-regeneration cycle system 2 for humidifying and preheating a working fluid of the gas turbine system 1, and an exhaust gas treatment system 3 for treating a moisture that is contained in an exhaust gas discharged from the gas turbine system 1. A gas turbine generator 5 is mechanically connected to the gas turbine system 1.

The gas turbine system 1 includes, for example, a water atomization cooling unit 11 for humidifying intake air, a compressor 12 for compressing air from the water atomization cooling unit 11, a combustor 13 for combusting a fuel with the compressed air from the compressor 12 as a combustion assistant to produce a combustion gas, and a turbine 14 driven by the combustion gas from the combustor 13 for driving the compressor 12 and the gas turbine generator 5.

The humidification-regeneration cycle system 2 includes a humidification tower 21 for humidifying the compressed air discharged from the compressor 12 and a recuperator 22 for preheating highly humid compressed air from the humidification tower 21 by exchanging heat with an exhaust gas from the turbine 14. The humidification-regeneration cycle system 2 further includes, for example, a humidification circulating water system for reusing water that is kept in the humidification tower 21 as humidification water for humidifying the compressed air from the compressor 12. The humidification circulating water system includes, for example, an economizer 23 for exchanging heat between the water kept in the humidification tower 21 and the exhaust gas that has passed through the recuperator 22, an air cooler 24 for exchanging heat between the water kept in the humidification tower 21 and the compressed air from the compressor 12, and a humidification tower circulating water pump 25 for delivering the water kept in the humidification tower 21 to the economizer 23 and the air cooler 24 to supply the water again to the humidification tower 21. The humidification-regeneration cycle system 2 further includes a humidification tower supplementing water pump 26 for supplementing the humidification tower 21 with the moisture (recovery water) in the exhaust gas which is recovered by a water recovery unit 32 to be described below.

The exhaust gas treatment system 3 includes a water recovery unit 32 for recovering the moisture that is contained in the exhaust gas by cooling the exhaust gas discharged from the turbine 14 and passing through the recuperator 22 and the economizer 23 with cooling water as a coolant, and a coolant circulation system 33 for supplying the moisture recovered from the exhaust gas by the water recovery unit 32 and the cooling water recovered as hot water by cooling the exhaust gas in the water recovery unit 32, that is, recovery water, as cooling water to the water recovery unit 32. The water recovery unit 32 includes, for example, a unit main section 32a for cooling the exhaust gas passing therethrough by way of gas-liquid contact by spraying cooling water into the exhaust gas and recovering the moisture contained in the exhaust gas and the sprayed water as recovery water, and a water recovery unit packing 32b disposed in the unit main section 32a. The water recovery unit packing 32b has a large number of holes, grooves, recesses, and the like, and serves to improve efficiency in contact between the exhaust gas and the cooling water and recover the moisture in the exhaust gas efficiently. The coolant circulation system 33 includes a coolant cooler 34 for cooling the recovery water that has been recovered by the water recovery unit 32, a recovery water delivery pipe 35 connected to a lower portion of the water recovery unit 32 and the inlet of the coolant cooler 34, a coolant supply pipe 36 connected to the outlet of the coolant cooler 34 and an upper portion (distributor, not shown) of the water recovery unit 32, and a coolant supply pump 37 provided in the recovery water delivery pipe 35. The recovery water delivery pipe 35 serves to deliver the recovery water from water recovery unit 32 to the coolant cooler 34. The coolant supply pipe 36 serves to supply the recovery water that has been cooled by the coolant cooler 34 to the water recovery unit 32. The coolant supply pump 37 serves to deliver the recovery water from water recovery unit 32 to the coolant cooler 34, thereby supplying the recovery water to the water recovery unit 32.

The exhaust gas treatment system 3 also includes an exhaust gas reheater 41 disposed downstream of the water recovery unit 32 with respect to the flow of the exhaust gas, for heating the exhaust gas that has passed through the water recovery unit 32 through a heat exchange with a heat medium, and a heat medium system 42 for supplying the heat medium to the exhaust gas reheater 41. The heat medium in the exhaust gas reheater 41 includes the moisture recovered by the water recovery unit 32 and the cooling water that has been recovered as hot water by cooling the exhaust gas in the water recovery unit 32, i.e., the recovery water that has been recovered by the water recovery unit 32.

The heat medium system 42 includes a heat medium supply pipe 43 connected to a portion of the recovery water delivery pipe 35 on a delivery side of the coolant supply pump 37 and the inlet of the exhaust gas reheater 41, and a heat medium return pipe 44 connected to a portion of the recovery water delivery pipe 35 on a suction side of the coolant supply pump 37 and the outlet of the exhaust gas reheater 41. The heat medium supply pipe 43 serves to supply part of the high-temperature recovery water that has been recovered by the water recovery unit 32, as the heat medium to the exhaust gas reheater 41. The heat medium return pipe 44 serves to return part of the recovery water that has heated the exhaust gas in the exhaust gas reheater 41 to the recovery water delivery pipe 35. The coolant supply pump 37 also functions as a pump for delivering part of the recovery water from the water recovery unit 32 to the exhaust gas reheater 41.

Of the exhaust gas treatment system 3, the water recovery unit 32 and the coolant circulation system 33 serve as a water recovery system for recovering the moisture contained in the exhaust gas, i.e., the water charged into the gas turbine system 1 by the humidification tower 21 and the water produced by the combustion of the fuel.

Flows of the working fluid in the advanced humid air turbine system according to the first embodiment of the present invention will be described below with reference to FIG. 1.

In FIG. 1, intake air is humidified by the water atomization cooling unit 11 and then compressed by the compressor 12. The compressed air is cooled by the air cooler 24 for the purpose of allowing the subsequent humidification tower 21 to perform a humidification process highly efficiently, and thereafter flows into the humidification tower 21, wherein the compressed air is humidified. The humidified compressed air is heated by heat exchange with the exhaust gas from the turbine 14 in the recuperator 22, so that the moisture in the compressed air completely vaporizes. The compressed air is then led to the combustor 13, wherein the compressed air is mixed with a fuel and the air-fuel mixture is combusted, producing a high-temperature combustion gas. The combustion gas drives the turbine 14, which converts the heat energy of the combustion gas into kinetic energy. The kinetic energy is consumed through driving the compressor 12, and is also converted into electric energy by the gas turbine generator 5.

The exhaust gas discharged from the turbine 14 contains a large amount of moisture because of the humidification processes at the water atomization cooling unit 11 and the humidification tower 21. The exhaust gas heats the compressed air from the humidification tower 21 in the recuperator 22, whereupon part of the heat energy of the exhaust gas is recovered into the compressed air. Thereafter, the exhaust gas heats the humidification water for the humidification tower 21 in the economizer 23, whereupon part of the heat energy of the exhaust gas is recovered into the humidification water for humidifying the compressed air. Since part of the heat energy of the exhaust gas discharged from the gas turbine system 1 is recovered by the recuperator 22 and the economizer 23, the thermal efficiency of the advanced humid air turbine system is improved.

The exhaust gas that has passed through the economizer 23 is guided into the water recovery unit 32, wherein part of the moisture in the exhaust gas is recovered. Thereafter, the exhaust gas is heated by the exhaust gas reheater 41 and then discharged into the atmosphere through a stack (not shown). The part of the moisture of the exhaust gas that has been recovered by the water recovery unit 32 is supplied to the humidification tower 21 by the humidification tower supplementing water pump 26. The advanced humid air turbine system thus effectively utilizes water resources because the water added to the working fluid of the gas turbine system 1 is recovered by the water recovery unit 32.

Operation of the exhaust gas treatment system for the advanced humid air turbine system according to the first embodiment of the present invention will be described below with reference to FIG. 1.

The exhaust gas that has passed through the economizer 23 has its temperature lowered to a certain point because part of the heat energy of the exhaust gas has been recovered by the recuperator 22 and the economizer 23. For example, the temperature of the exhaust gas that has passed through the economizer 23 is about 150°C.

The exhaust gas is guided into the water recovery unit 32, in which the exhaust gas is cooled by cooling water sprayed from an upper portion in the water recovery unit 32. Thus, part of the moisture contained in the exhaust gas is turned into condensed water, which is stored as recovery water in a lower portion of the water recovery unit 32. The cooling water whose temperature has been raised by heat exchange with the exhaust gas is also recovered and stored as recovery water in the lower portion of the water recovery unit 32. The temperature of the cooling water that cools the exhaust gas is about 30°C, for example, so that the temperature of the exhaust gas drops from about 150°C to about 35°C when the exhaust gas is cooled by the cooling water. The recovery water that has been recovered by the water recovery unit 32 is about 70°C, for example.

The recovery water that has been recovered by the water recovery unit 32 is delivered through the recovery water delivery pipe 35 to the coolant cooler 34 by the coolant supply pump 37. The recovery water is cooled by the coolant cooler 34 and then supplied as cooling water through the coolant supply pipe 36 to the water recovery unit 32. The coolant cooler 34 cools the recovery water from about 70°C to about 30°C, for example.

The exhaust gas that has passed through the water recovery unit 32 has its temperature and absolute humidity lowered when it is cooled and its moisture is recovered by the water recovery unit 32. As described above, the temperature of the exhaust gas is about 35°C, for example. The exhaust gas is then guided into the exhaust gas reheater 41, heated by the heat medium flowing through the exhaust gas reheater 41, and thereafter discharged into the atmosphere.

In the present embodiment, the moisture (recovery water) recovered from the exhaust gas in the water recovery unit 32 and the cooling water (recovery water) whose temperature has been raised by cooling the exhaust gas are used as the heat medium that flows through the exhaust gas reheater 41. Specifically, part of the recovery water that has been recovered in the water recovery unit 32 is delivered through the heat medium supply pipe 43 to the exhaust gas reheater 41 by the coolant supply pump 37. After having heated the exhaust gas through heat exchange with the exhaust gas in the exhaust gas reheater 41, the recovery water returns through the heat medium return pipe 44 to the recovery water delivery pipe 35 of the coolant circulation system 33. The recovery water that has returned to the recovery water delivery pipe 35 is supplied as the cooling water for the water recovery unit 32 to the water recovery unit 32 or as the heat medium for the exhaust gas reheater 41 to the exhaust gas reheater 41. The temperature of the recovery water in the exhaust gas reheater 41 drops from about 70°C to about 60°C, for example. The temperature of the exhaust gas rises from about 35°C to about 50°C, for example.

In this manner, the exhaust gas that has passed through the economizer 23 has its absolute humidity lowered as part of the moisture in the exhaust gas is recovered by the water recovery unit 32, and has its temperature raised as the exhaust gas is heated by the exhaust gas reheater 41. Therefore, as described later, plume is prevented from being produced at the time the exhaust gas is discharged into the atmosphere.

In the present embodiment, the high-temperature recovery water that has been recovered by the water recovery unit 32 is supplied as the heat medium for heating the exhaust gas to the exhaust gas reheater 41. Consequently, the heat energy recovered by the humidification-regeneration cycle system 2, e.g., the economizer 23, does not need to be used as a heating source for preventing plume of the exhaust gas from being produced, but can be supplied to the gas turbine system 1. In the conventional system, since the recovery water that has been recovered by the water recovery unit is cooled by the coolant cooler and used as cooling water again, the heat energy of the exhaust gas that has been recovered by the water recovery unit is emitted out of the system. In the present embodiment, however, part of the heat energy recovered from the exhaust gas by the water recovery unit 32 is used to heat the exhaust gas in the exhaust gas reheater 41, so that the heat loss of the overall system can be reduced.

In the present embodiment, furthermore, inasmuch as the water added to the working fluid in the gas turbine system 1 and the cooling water used to cool the exhaust gas in the water recovery unit 32 are reused as the cooling water for the water recovery unit 32 and the heat medium for the exhaust gas reheater 41, the water resources are effectively utilized.

In the present embodiment, moreover, the heat medium supply pipe 43 and the heat medium return pipe 44 of the heat medium system 42 are not connected to component devices of the gas turbine system 1 and the humidification-regeneration cycle system 2, but connected to the recovery water delivery pipe 35 of the coolant circulation system 33. Consequently, considerations required in connection between component devices of the gas turbine system 1 and the humidification-regeneration cycle system 2 and component devices of the exhaust gas treatment system 3 can be reduced. Furthermore, design adjustments (design changes, etc.) to be made for preventing plume from being produced may take into account only the specifications of the devices of the exhaust gas treatment system 3, so that design effects which the gas turbine system 1 and the humidification-regeneration cycle system 2 positioned upstream of the exhaust gas treatment system 3 have on such design adjustments can be reduced.

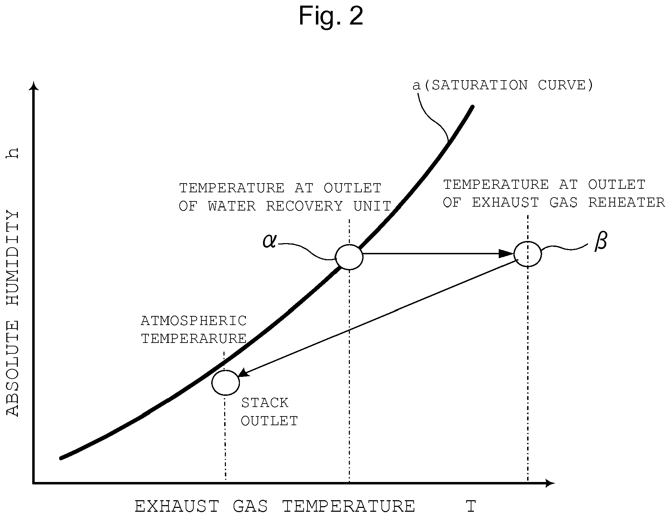

The ability of the exhaust gas treatment system for the advanced humid air turbine system according to the first embodiment of the present invention to prevent plume from being produced will be described below with reference to FIGS. 1 and 2.

FIG. 2 is a characteristic diagram showing a transition of the temperature and the absolute humidity of the exhaust gas of the advanced humid air turbine system and the exhaust gas treatment system according to the first embodiment of the present invention. In FIG. 2, the vertical axis h represents the absolute humidity of the exhaust gas, and the horizontal axis T represents the temperature of the exhaust gas. The thick curve "a" represents a saturation curve of water, and the arrows represent the transition of the exhaust gas up to the emission into the atmosphere. In FIG. 2, the same elements as used in Figs. 1 are each identified by the same reference number and detailed description of these elements is therefore omitted herein.

In FIG. 2, if the transition of the exhaust gas stays below the saturation curve "a," plume is prevented from being produced. The exhaust gas cooled by the water recovery unit 32 shown in FIG. 1 and then discharged out of the unit 32 has its state at a position α on the saturation curve "a" at the temperature of the outlet of the water recovery unit 32. The exhaust gas at the position α on the saturation curve "a" is heated by the recovery water that has been recovered by the water recovery unit 32 in the exhaust gas reheater 41, so that the temperature of the exhaust gas rises, but the absolute humidity thereof remains unchanged. The state of the exhaust gas now moves to a position β at the temperature of the outlet of the exhaust gas reheater 41. When the exhaust gas in that state is discharged through the stack into the atmosphere, the exhaust gas has its temperature lowered to the atmospheric temperature while discharging its moisture. If the state of the exhaust gas moves into contact with the saturation curve "a," then the exhaust gas quickly discharges its moisture into the atmosphere and any excess moisture beyond saturated state in the atmosphere turns into plume. Therefore, as long as the state of the exhaust gas changes as shown in FIG. 2, no plume is produced.

Since the exhaust gas heated by the exhaust gas reheater 41 thus has its temperature increased without a change in its absolute humidity, even when the exhaust gas is emitted into the atmosphere, the transition of the state of the exhaust gas remains below the saturation curve "a," thereby preventing plume from being produced.

As described above, according to the advanced humid air turbine system and the exhaust gas treatment system according to the first embodiment of the present invention, the exhaust gas is heated by the exhaust gas reheater 41 using the cooling water (coolant) that has exchanged heat with the exhaust gas in the water recovery unit 32, i.e., the heat energy recovered from the exhaust gas by the water recovery unit 32. Therefore, it is not necessary to use heat energy to be supplied again to the gas turbine system 1 as a heating source for the exhaust gas reheater 41, and the heat loss of the overall system can be reduced while preventing the system from producing plume.

According to the present embodiment, furthermore, the coolant circulation system 33 supplies the recovery water that has been recovered in the water recovery unit 32 as cooling water for cooling the exhaust gas to the water recovery unit 32, and the heat medium system 42 supplies part of the recovery water that has been recovered in the water recovery unit 32 as a heat medium for heating the exhaust gas, from the coolant circulation system 33 to the exhaust gas reheater 41 and then returns the supplied recovery water to the coolant circulation system 33. Consequently, the water resources are effectively utilized.

According to the present embodiment, moreover, the heat medium supply pipe 43 and the heat medium return pipe 44 of the heat medium system 42 are connected respectively to the portions of the recovery water delivery pipe 35 on the delivery side and on the suction side of the coolant supply pump 37. Therefore, the coolant supply pump 37 of the coolant circulation system 33 can be operated as a pump for delivering the heat medium to the exhaust gas reheater 41. It is thus not necessary for the heat medium system 42 to have a separate pump for delivering the heat medium to the exhaust gas reheater 41. As a result, the efficiency of the overall system is prevented from being lowered.

### MODIFICATION OF FIRST EMBODIMENT

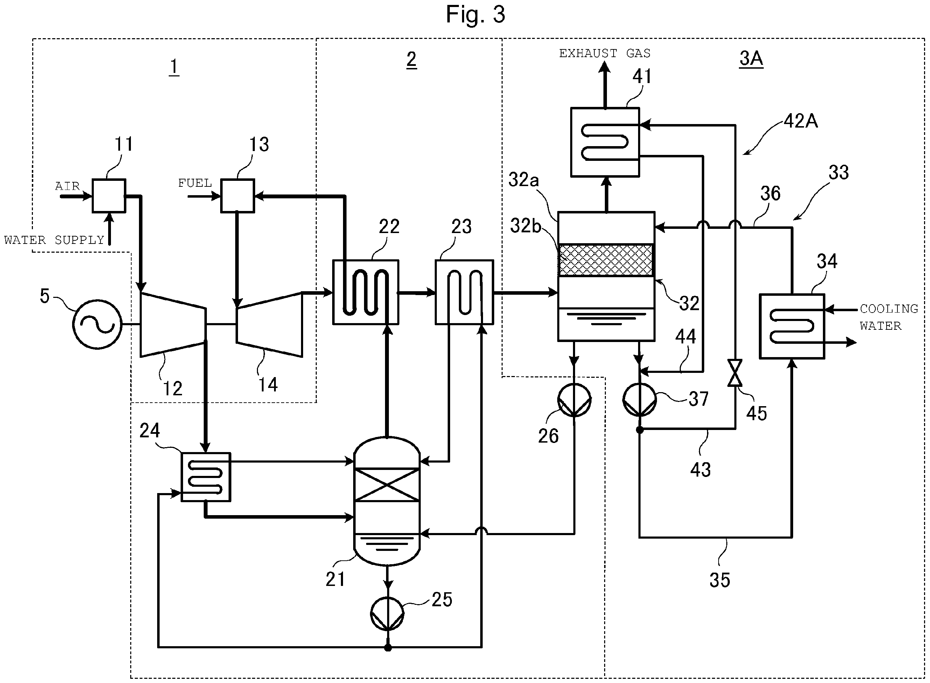

A modification of the advanced humid air turbine system and the exhaust gas treatment system according to the first embodiment of the present invention will be described below with reference to FIG. 3.

FIG. 3 is a configuration diagram of an advanced humid air turbine system and an exhaust gas treatment system according to a modification of the first embodiment of the present invention. In FIG. 3, the arrows represent the directions of flows of a working fluid, an exhaust gas, introduced water, and recovery water, etc. in the advanced humid air turbine system. In FIG. 3, the same elements as used in Figs. 1 and 2 are each identified by the same reference number and detailed description of these elements is therefore omitted herein.

In the modification of the first embodiment, as shown in FIG. 3, the exhaust gas treatment system, denoted by 3A, includes, in addition to the arrangement of the first embodiment, a flow rate regulating valve 45 for regulating the flow rate of the recovery water to be supplied to the exhaust gas reheater 41, the flow rate regulating valve 45 being provided in the heat medium supply pipe 43 of a heat medium system 42A. In the exhaust gas treatment system 3A, the valve opening of the flow rate regulating valve 45 is controlled depending on whether plume of the exhaust gas is produced or not. The control of the valve opening of the flow rate regulating valve 45 allows a ratio of the flow rate of the recovery water to be supplied as the heat medium through the heat medium supply pipe 43 to the exhaust gas reheater 41 and the flow rate of the recovery water to be supplied as the cooling water through the recovery water delivery pipe 35 to the water recovery unit 32 to be adjusted to an appropriate value.

The advanced humid air turbine system and the exhaust gas treatment system according to the modification of the first embodiment of the present invention offer the same advantages as those of the first embodiment described above.

Furthermore, according to the modification of the first embodiment, as the flow rate regulating valve 45 for regulating the flow rate of the recovery water is provided in the heat medium supply pipe 43 that supplies the recovery water as the heat medium to the exhaust gas reheater 41, the flow rate of the recovery water to be supplied to the exhaust gas reheater 41 is regulated by the flow rate regulating valve 45 depending on the situation, for reliably preventing plume from being produced.

### SECOND EMBODIMENT

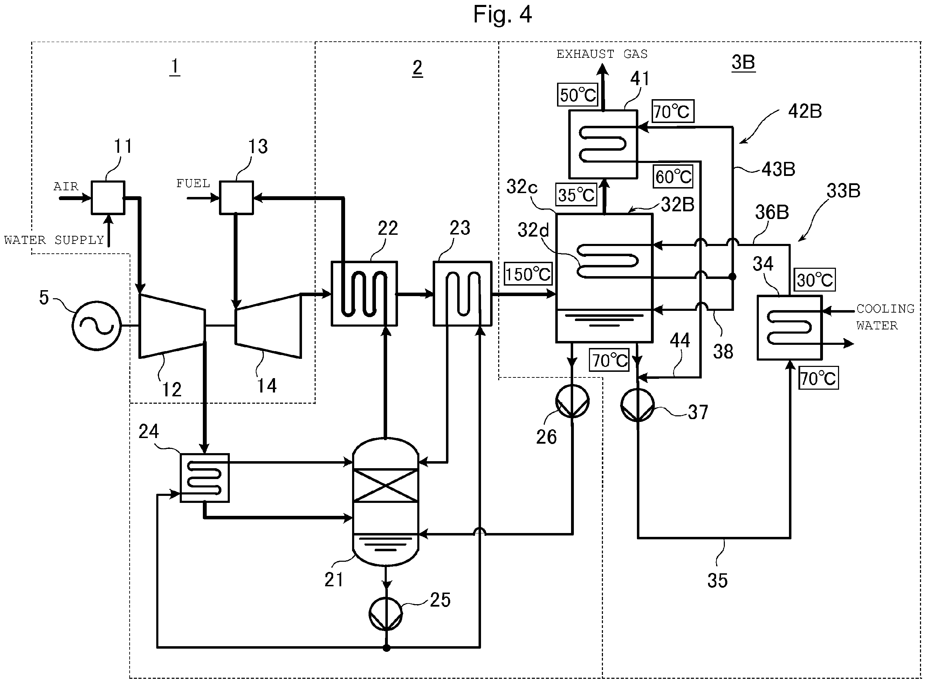

The system configuration of an advanced humid air turbine system and an exhaust gas treatment system according to a second embodiment of the present invention will first be described below with reference to FIG. 4.

FIG. 4 is a configuration diagram of the advanced humid air turbine system and the exhaust gas treatment system according to the second embodiment of the present invention. In FIG. 4, the arrows represent the directions of flows of a working fluid, an exhaust gas, introduced water, and recovery water, etc. in the advanced humid air turbine system. Those parts shown in FIG. 4 which are denoted by reference characters identical to those in FIGS. 1 through 3 are identical to the corresponding parts in FIGS. 1 through 3, and will not be described in detail below.

In the second embodiment, as shown in FIG. 4, the exhaust gas treatment system, denoted by 3B, includes a water recovery unit 32B for cooling the exhaust gas with a heat exchanger 32d, rather than the water recovery unit 32 which cools the exhaust gas by way of gas-liquid contact by spraying cooling water according to the first embodiment. With the substitution of the water recovery unit 32B for the water recovery unit 32, the exhaust gas treatment system 3B also includes a coolant circulation system 33B and a heat medium system 42B which are different in structure from the coolant circulation system 33 and the heat medium system 42 according to the first embodiment.

Specifically, the water recovery unit 32B of the exhaust gas treatment system 3B includes a unit main section 32c into which the exhaust gas flows and the heat exchanger 32d disposed inside the unit main section 32c. The water recovery unit 32B serves to cool the exhaust gas with cooling water that flows as a coolant through the heat exchanger 32d and to recover moisture contained in the exhaust gas as recovery water. The water recovery unit 32B also serves to recover cooling water which has exchanged heat with the exhaust gas in the heat exchanger 32d, as recovery water through a coolant return pipe 38 to be described later.

The coolant circulation system 33B of the exhaust gas treatment system 3B includes a coolant supply pipe 36B connected to the outlet of the coolant cooler 34 and the inlet of the heat exchanger 32d, instead of the coolant supply pipe 36 connected to the outlet of the coolant cooler 34 and the upper portion (distributor, not shown) of the water recovery unit 32 according to the first embodiment. The coolant circulation system 33B also includes a coolant return pipe 38 connected to the outlet of the heat exchanger 32d and the lower portion of the water recovery unit 32B. The coolant circulation system 33B serves to supply the moisture recovered from the exhaust gas by the water recovery unit 32B and the cooling water (recovery water) which has been recovered as hot water by cooling the exhaust gas, to the heat exchanger 32d, and recover the moisture and the cooling water (recovery water) again to the water recovery unit 32B.

The heat medium system 42B of the exhaust gas treatment system 3B includes a heat medium supply pipe 43B connected to the coolant return pipe 38 and the inlet of the exhaust gas reheater 41, instead of the heat medium supply pipe 43 connected to the recovery water delivery pipe 35 and the inlet of the exhaust gas reheater 41 according to the first embodiment.

Operation of the exhaust gas treatment system for the advanced humid air turbine system according to the second embodiment of the present invention will be described below with reference to FIG. 4.

The exhaust gas that has passed through the economizer 23 is guided into the water recovery unit 32B, wherein the exhaust gas is cooled by the cooling water flowing through the heat exchanger 32d of the water recovery unit 32B. Part of the moisture contained in the exhaust gas is now turned into condensed water, which is stored as recovery water in a lower portion of the water recovery unit 32B. The cooling water in the heat exchanger 32d, whose temperature has been raised by heat exchange with the exhaust gas, is also recovered through the coolant return pipe 38 and stored as recovery water in the lower portion of the water recovery unit 32B. The temperature of the cooling water in the heat exchanger 32d is about 30°C, for example, so that the temperature of the exhaust gas drops from about 150°C to about 35°C when the exhaust gas is cooled by the cooling water. The recovery water that has been recovered by the water recovery unit 32B is about 70°C, for example.

The recovery water that has been recovered by the water recovery unit 32B is cooled by the coolant cooler 34 and then supplied as cooling water through the coolant supply pipe 36B to the heat exchanger 32d. The coolant cooler 34 cools the recovery water from about 70°C to about 30°C, for example.

The exhaust gas that has passed through the water recovery unit 32B is guided into the exhaust gas reheater 41, heated by the heat medium, and thereafter emitted into the atmosphere. In the present embodiment, the heat medium in the exhaust gas reheater 41 includes the cooling water, i.e., the recovery water, whose temperature has been raised by flowing through the heat exchanger 32d and cooling the exhaust gas. Specifically, part of the high-temperature cooling water that has cooled the exhaust gas in the heat exchanger 32d is supplied as the heat medium through the heat medium supply pipe 43B of the heat medium system 42B to the exhaust gas reheater 41. The high-temperature cooling water heats the exhaust gas by heat exchange with the exhaust gas, and thereafter returns through the heat medium return pipe 44 of the heat medium system 42B to the recovery water delivery pipe 35 of the coolant circulation system 33B. The cooling water which has returned to the recovery water delivery pipe 35 is supplied as the cooling water for the heat exchanger 32d. Part of the cooling water that has cooled the exhaust gas is supplied as the heat medium to the exhaust gas reheater 41, and the remainder is recovered through the coolant return pipe 38 to the water recovery unit 32B. The temperature of the recovery water supplied to the exhaust gas reheater 41 drops from about 70°C to about 60°C, for example. The temperature of the exhaust gas rises from about 35°C to about 50°C, for example.

According to the present embodiment, the cooling water as the coolant whose temperature has been raised by heat exchange with the exhaust gas by the heat exchanger 32d of the water recovery unit 32B is used as the heat medium for the exhaust gas reheater 41. As with the first embodiment, since the exhaust gas is heated by the exhaust gas reheater 41 using the heat energy recovered from the exhaust gas by the water recovery unit 32B, heat energy to be supplied again to the gas turbine system 1 does not need to be used as a heating source for the exhaust gas reheater 41. Therefore, the heat loss of the overall system can be reduced.

The advanced humid air turbine system and the exhaust gas treatment system therefor according to the second embodiment of the present invention offer the same advantages as those of the first embodiment described above.

Furthermore, in the present embodiment, because the heat medium supply pipe 43B of the heat medium system 42B is connected to the coolant return pipe 38, only the cooling water whose temperature has been raised by heat exchange with the exhaust gas by the heat exchanger 32d can be supplied as the heat medium through the heat medium supply pipe 43B to the exhaust gas reheater 41. In the first embodiment, as the heat medium supply pipe 43 is connected to the portion of the recovery water delivery pipe 35 on the delivery side of the coolant supply pump 37, the high-temperature recovery water that has been recovered by the water recovery unit 32 and the recovery water whose temperature has been lowered by heating the exhaust gas in the exhaust gas reheater 41 are supplied together as the heat medium through the heat medium supply pipe 43 to the exhaust gas reheater 41. According to the present embodiment, therefore, the temperature of the heat medium supplied to the exhaust gas reheater 41 is higher than the temperature of the heat medium supplied to the exhaust gas reheater 41 according to the first embodiment, so that the exhaust gas is heated more reliably by the exhaust gas reheater 41 according to the present embodiment.

### MODIFICATION OF SECOND EMBODIMENT

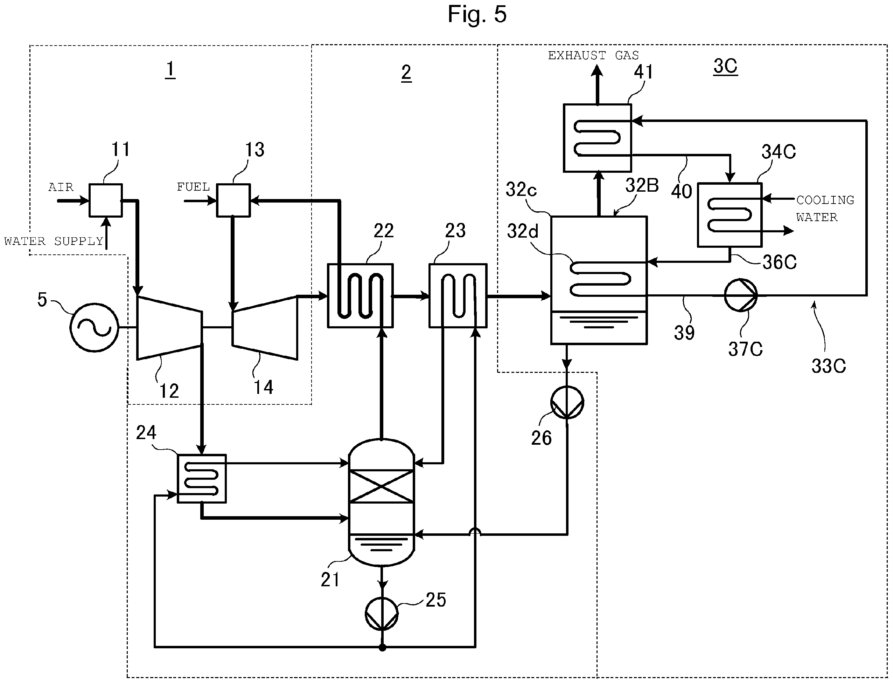

A modification of the advanced humid air turbine system and the exhaust gas treatment system according to the second embodiment of the present invention will be described below with reference to FIG. 5.

FIG. 5 is a configuration diagram of an advanced humid air turbine system and an exhaust gas treatment system therefor according to a modification of the second embodiment of the present invention. In FIG. 5, the arrows represent the directions of flows of a working fluid, an exhaust gas, introduced water, and recovery water, etc. in the advanced humid air turbine system. Those parts shown in FIG. 5 which are denoted by reference characters identical to those in FIGS. 1 through 4 are identical to the corresponding parts in FIGS. 1 through 4, and will not be described in detail below.

In the modification of the second embodiment, as shown in FIG. 5, the exhaust gas treatment system, denoted by 3C, includes a coolant circulation system 33C that incorporates a heat medium system, whereas the exhaust gas treatment system 3B according to the second embodiment includes the coolant circulation system 33B and the heat medium system 42B as two separate systems. Furthermore, in the present modification, the moisture recovered from the exhaust gas is not used, but only the cooling water which has exchanged heat with the exhaust gas in the heat exchanger 32d is used as the cooling water for the heat exchanger 32d, whereas both the moisture recovered from the exhaust gas and the cooling water which has exchanged heat with the exhaust gas in the heat exchanger 32d are used as the cooling water for the heat exchanger 32d of the water recovery unit 32B according to the second embodiment.

Specifically, the coolant circulation system 33C of the exhaust gas treatment system 3C includes a coolant delivery pipe 39 connected to the outlet of the heat exchanger 32d and the inlet of the exhaust gas reheater 41, a coolant cooler 34C for cooling the cooling water as the heat medium which has heated the exhaust gas in the exhaust gas reheater 41, a heat medium delivery pipe 40 connected to the outlet of the exhaust gas reheater 41 and the inlet of the coolant cooler 34C, a coolant supply pipe 36C connected to the outlet of the coolant cooler 34C and the inlet of the heat exchanger 32d, and a coolant supply pump 37C provided in the coolant delivery pipe 39. The coolant delivery pipe 39 serves to deliver the cooling water whose temperature has been raised by heat exchange with the exhaust gas in the heat exchanger 32d, as the heat medium to the exhaust gas reheater 41. The heat medium delivery pipe 40 serves to deliver the cooling water which has heated the exhaust gas in the exhaust gas reheater 41 to the coolant cooler 34C. The coolant supply pipe 36C serves to supply the cooling water that has been cooled by the coolant cooler 34C to the heat exchanger 32d. The coolant supply pump 37C serves to deliver the cooling water that has exchanged heat with the exhaust gas in the heat exchanger 32d to the exhaust gas reheater 41, and supply the cooling water through the coolant cooler 34C to the heat exchanger 32d.

In the coolant circulation system 33C constructed as described above, the cooling water whose temperature has been raised by exchanging heat with the exhaust gas in the heat exchanger 32d is delivered through the coolant delivery pipe 39 to the exhaust gas reheater 41 by the coolant supply pump 37C. The cooling water heats the exhaust gas as the heating medium by heat exchange with the exhaust gas in the exhaust gas reheater 41, and hence has its temperature lowered. Thereafter, the cooling water flows through the heat medium delivery pipe 40 into the coolant cooler 34C, in which the cooling water is cooled. The cooling water is then supplied as the cooling water again to the heat exchanger 32d. In other words, the coolant circulation system 33C circulates the cooling water to the heat exchanger 32d and also circulates the cooling water that has exchanged heat with the exhaust gas in the heat exchanger 32d as the heat medium for the exhaust gas reheater 41, and doubles as the heat medium system.

The advanced humid air turbine system and the exhaust gas treatment system therefor according to the modification of the second embodiment of the present invention offer the same advantages as those of the second embodiment described above.

Furthermore, according to the present modification, since the coolant circulation system 33C is configured to supply the cooling water that has exchanged heat with the exhaust gas in the heat exchanger 32d of the water recovery unit 32B to the exhaust gas reheater 41 and thereafter to supply the cooling water as the cooling water for cooling the exhaust gas again to the heat exchanger 32d, the coolant circulation system 33C doubles as the heat medium system, resulting in a simplified system configuration.

### THIRD EMBODIMENT

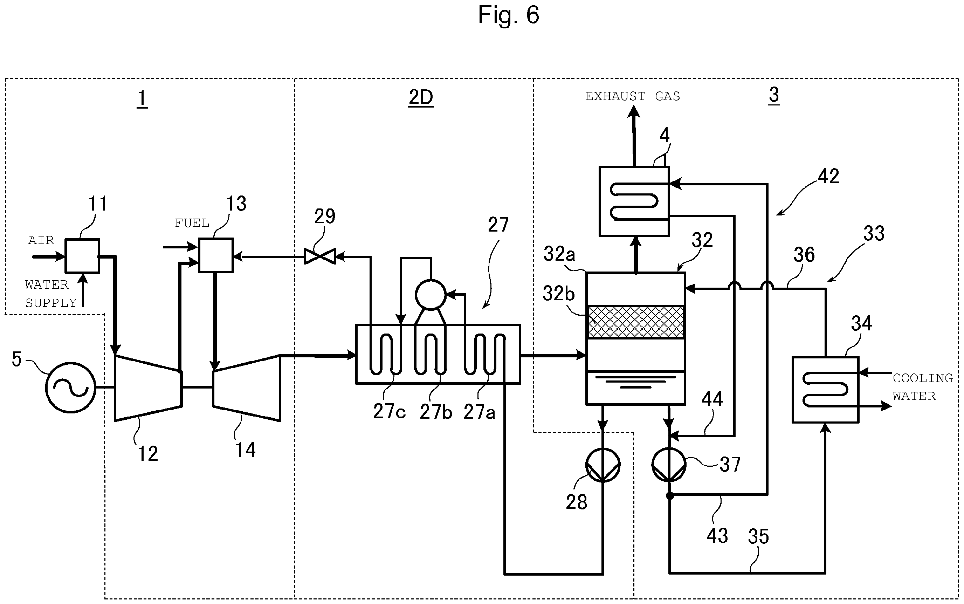

The system configuration of an advanced humid air turbine system and an exhaust gas treatment system therefor according to a third embodiment of the present invention will first be described below with reference to FIG. 6.

FIG. 6 is a configuration diagram of the advanced humid air turbine system and the exhaust gas treatment system therefor according to the third embodiment of the present invention. In FIG. 6, the arrows represent the directions of flows of a working fluid, an exhaust gas, introduced water, and recovery water, etc. in the advanced humid air turbine system. Those parts shown in FIG. 6 which are denoted by reference characters identical to those in FIGS. 1 through 5 are identical to the corresponding parts in FIGS. 1 through 5, and will not be described in detail below.

In the third embodiment, as shown in FIG. 6, the advanced humid air turbine system includes a humidification system 2D having a heat recovery boiler 27 for generating steam by introducing the exhaust gas from the gas turbine system 1, instead of the humidification-regeneration cycle system 2 according to the first embodiment. The humidification system 2D serves to humidify the working fluid in the gas turbine system 1 by supplying the steam generated by the heat recovery boiler 27.

Specifically, the heat recovery boiler 27 includes an economizer 27a for preheating the recovery water that has been recovered by the water recovery unit 32 with the exhaust gas from the gas turbine system 1, an evaporator 27b for generating steam by heating the recovery water that has been preheated by the economizer 27a with the exhaust gas from the gas turbine system 1, and a superheater 27c for superheating the steam generated by the evaporator 27b with the exhaust gas from the gas turbine system 1. The humidification system 2D also includes a boiler feed pump 28 for supplying the heat recovery boiler 27 with the recovery water that has been recovered by the water recovery unit 32, instead of the humidification tower supplementing water pump 26 according to the first embodiment. The superheated steam generated by the superheater 27c of the heat recovery boiler 27 is regulated in flow rate by a steam flow rate regulating valve 29 and then supplied to the combustor 13 of the gas turbine system 1.

According to the present embodiment, since part of the heat energy of the exhaust gas discharged from the gas turbine system 1 is recovered by the heat recovery boiler 27, the thermal efficiency of the overall system is improved.

The advanced humid air turbine system and the exhaust gas treatment system therefor according to the third embodiment of the present invention offer the same advantages as those of the first embodiment described above.

### OTHER EMBODIMENTS

In each of the first through third embodiments described above, the gas turbine system 1 is arranged to include the water atomization cooling unit 11 therein. However, it is possible to construct a gas turbine system which is free of a water atomization cooling unit 11. However, the arrangement of the gas turbine system 1 that includes the water atomization cooling unit 11 is capable of increasing the output and improving the electric generation efficiency.

In each of the first and second embodiments and the modifications thereof described above, the humidification-regeneration cycle system 2 includes the humidification tower 21, the recuperator 22, the economizer 23, the air cooler 24, the humidification tower circulating water pump 25, and the humidification tower supplementing water pump 26. However, the humidification-regeneration cycle system may include at least the humidification tower 21 and the recuperator 22.

In the modification of the first embodiment described above, the heat medium system 42A includes the flow rate regulating valve 45 for regulating the flow rate of the recovery water to be supplied to the exhaust gas reheater 41. Each of the heat medium systems 42B, 42 according to the second and third embodiments may include such a flow rate regulating valve.

In the modification of the second embodiment, the exhaust gas treatment system 3C includes the coolant circulation system 33C which doubles as the heat medium system. In each of the first and third embodiments, the exhaust gas treatment system may be arranged such that the coolant circulation system doubles as the heat medium system. Specifically, the coolant circulation system according to each of the first and third embodiments may be configured to deliver the recovery water that has been recovered by the water recovery unit 32 shown in FIG. 1 to the exhaust gas reheater 41, then cool the recovery water with the coolant cooler 34, and supply the cooled recovery water as the cooling water to the water recovery unit 32.

In the modification of the second embodiment, furthermore, the exhaust gas is cooled by passing the cooling water through the heat exchanger 32d of the water recovery unit 32B. However, a coolant other than the cooling water may be used in the heat exchanger 32d.

The present invention is not limited to the first through third embodiments and the modifications thereof described above, but may include various other modifications. The embodiments and modifications described above are illustrated in detail in order to explain the present invention for a better understanding, and should not necessarily be limited to only those described above. Part of the arrangement of a certain embodiment may be replaced with part of the arrangement of another embodiment, and part of the arrangement of a certain embodiment may be added to part of the arrangement of another embodiment. It is possible to add, remove, or replace part of the arrangement of a certain embodiment to, from, or with part of the arrangement of another embodiment.

## Claims

1. An exhaust gas treatment system for an advanced humid air turbine system, for treating a moisture contained in an exhaust gas discharged from a gas turbine system (1) in which a working fluid is humidified, the exhaust gas treatment system comprising:
a water recovery unit (32; 32B) for recovering the moisture contained in the exhaust gas by cooling the exhaust gas discharged from the gas turbine system (1) with a coolant;
an exhaust gas reheater (41) disposed downstream of the water recovery unit (32; 32B) with respect to the flow of the exhaust gas, for heating the exhaust gas that has passed through the water recovery unit with a heat medium; and
a coolant circulation system (33; 33B) for supplying the coolant that has exchanged heat with the exhaust gas in the water recovery unit (32; 32B) as the coolant to the water recovery unit,
**characterized in that** the exhaust gas treatment system further comprises
a heat medium system (42; 42A; 42B) connected to the exhaust gas reheater (41) and the coolant circulation system (33; 33B), for supplying part of the coolant that has exchanged heat with the exhaust gas in the water recovery unit(32; 32B), as the heat medium to the exhaust gas reheater, and returning the coolant to the coolant circulation system, wherein
the coolant that has exchanged heat with the exhaust gas in the water recovery unit (32; 32B) is used as the heat medium for the exhaust gas reheater (41).

2. The exhaust gas treatment system for the advanced humid air turbine system according to claim 1,
wherein the water recovery unit (32) is configured to cool the exhaust gas by way of gas-liquid contact by spraying cooling water as the coolant and recover the moisture contained in the exhaust gas and the sprayed cooling water as recovery water;
wherein the coolant circulation system (33) comprises:
a coolant cooler (34) for cooling the recovery water that has been recovered by the water recovery unit (32);
a recovery water delivery pipe (35) connected to the water recovery unit (32) and the inlet of the coolant cooler (34), for delivering the recovery water that has been recovered by the water recovery unit to the coolant cooler;
a coolant supply pipe (36) connected to the outlet of the coolant cooler (34) and the water recovery unit (32), for supplying the recovery water that has been cooled by the coolant cooler as the cooling water to the water recovery unit; and
a coolant supply pump (37) provided in the recovery water delivery pipe (35), for delivering the recovery water that has been recovered by the water recovery unit (32) to the coolant cooler (34), and supplying the recovery water to the water recovery unit; and
wherein the heat medium system (42; 42A) comprises:
a heat medium supply pipe (43) connected to a portion of the recovery water delivery pipe (35) on a delivery side of the coolant supply pump (37) and the inlet of the exhaust gas reheater (41), for supplying part of the recovery water that has been recovered by the water recovery unit (32) to the exhaust gas reheater; and
a heat medium return pipe (44) connected to a portion of the recovery water delivery pipe (35) on a suction side of the coolant supply pump (37) and the outlet of the exhaust gas reheater (41), for returning the recovery water that has been supplied to the exhaust gas reheater to the recovery water delivery pipe.

3. The exhaust gas treatment system for the advanced humid air turbine system according to claim 1,
wherein the water recovery unit (32B) includes a heat exchanger (32d) for exchanging heat between cooling water as the coolant and the exhaust gas, and is configured to recover the moisture contained in the exhaust gas and the cooling water that has exchanged heat with the exhaust gas, as recovery water;
wherein the coolant circulation system (33B) comprises:
a coolant cooler (34) for cooling the recovery water that has been recovered by the water recovery unit (32B) ;
a recovery water delivery pipe (35) connected to the water recovery unit (32B) and the inlet of the coolant cooler (34), for delivering the recovery water that has been recovered by the water recovery unit to the coolant cooler;
a coolant supply pipe (36B) connected to the outlet of the coolant cooler (34) and the inlet of the heat exchanger (32d), for supplying the recovery water that has been cooled by the coolant cooler as the cooling water to the heat exchanger;
a coolant return pipe (38) connected to the outlet of the heat exchanger (32d) and the water recovery unit (32B), for returning the recovery water that has exchanged heat with the exhaust gas in the heat exchanger into the water recovery unit; and
a coolant supply pump (37) provided in the recovery water delivery pipe (35), for delivering the recovery water that has been recovered by the water recovery unit (32B) to the coolant cooler (34), and supplying the recovery water to the heat exchanger (32d); and
wherein the heat medium system (42B) comprises:
a heat medium supply pipe (43B) connected to the coolant return pipe (38) and the inlet of the exhaust gas reheater (41), for supplying part of the cooling water that has exchanged heat with the exhaust gas in the heat exchanger (32d) to the exhaust gas reheater; and
a heat medium return pipe (44) connected to a portion of the recovery water delivery pipe (35) on a suction side of the coolant supply pump (37) and the outlet of the exhaust gas reheater (41), for returning the cooling water that has been supplied to the exhaust gas reheater to the recovery water delivery pipe.

4. The exhaust gas treatment system for the advanced humid air turbine system according to any one of claims 1 through 3, further comprising:
a flow rate regulating valve (45) provided in the heat medium system (42A), for regulating a flow rate of the heat medium to be supplied to the exhaust gas reheater (41).

5. An advanced humid air turbine system comprising the exhaust gas treatment system (3; 3A; 3B) according to at least one of claims 1 to 4.

## Patentansprüche

1. Abgasbehandlungssystem für ein fortschrittliches Feuchtluft-Turbinensystem, um Feuchtigkeit zu behandeln, die in einem Abgas enthalten ist, das von einem Gasturbinensystem (1) ausgestoßen wird, in dem ein Arbeitsfluid befeuchtet wird, wobei das Abgasbehandlungssystem Folgendes umfasst:
eine Wasserrückgewinnungseinheit (32; 32B) zum Rückgewinnen der Feuchtigkeit, die in dem Abgas enthalten ist, durch Kühlen des Abgases, das von dem Gasturbinensystem (1) ausgestoßen wird, mit einem Kühlmittel;
einen Abgaswiedererhitzer (41), der stromabseitig der Wasserrückgewinnungseinheit (32; 32B) in Bezug auf die Strömung des Abgases angeordnet ist, um das Abgas, das sich durch die Wasserrückgewinnungseinheit bewegt hat, mit einem Heizmedium zu erhitzen; und
ein Kühlmittelumwälzsystem (33; 33B), um das Kühlmittel, das mit dem Abgas in der Wasserrückgewinnungseinheit (32; 32B) Wärme ausgetauscht hat, als das Kühlmittel der Wasserrückgewinnungseinheit zuzuführen,
**dadurch gekennzeichnet, dass** das Abgasbehandlungssystem ferner Folgendes umfasst:
ein Heizmediumsystem (42; 42A; 42B), das mit dem Abgaswiedererhitzer (41) und mit dem Kühlmittelumwälzsystem (33; 33B) verbunden ist, um einen Teil des Kühlmittels, das mit dem Abgas in der Wasserrückgewinnungseinheit (32; 32B) Wärme ausgetauscht hat, als das Heizmedium dem Abgaswiedererhitzer zuzuführen und das Kühlmittel zu dem Kühlmittelumwälzsystem zurückzuleiten, wobei
das Kühlmittel, das mit dem Abgas in der Wasserrückgewinnungseinheit (32; 32B) Wärme ausgetauscht hat, als das Heizmedium für den Abgaswiedererhitzer (41) verwendet wird.

2. Abgasbehandlungssystem für das fortschrittliche Feuchtluft-Turbinensystem nach Anspruch 1,
wobei die Wasserrückgewinnungseinheit (32) konfiguriert ist, Abgas mittels eines Gas/Flüssigkeits-Kontakts zu kühlen, indem Kühlwasser als das Kühlmittel versprüht wird und die in dem Abgas enthaltene Feuchtigkeit und das versprühte Kühlungswasser als Rückgewinnungswasser rückzugewinnen;
wobei das Kühlmittelumwälzsystem (33) Folgendes umfasst:
einen Kühlmittelkühler (34) zum Kühlen des Rückgewinnungswassers, das durch die Wasserrückgewinnungseinheit (32) rückgewonnen worden ist;
ein Rückgewinnungswasser-Förderrohr (35), das mit der Wasserrückgewinnungseinheit (32) und mit dem Einlass des Kühlmittelkühlers (34) verbunden ist, um das Rückgewinnungswasser, das durch die Wasserrückgewinnungseinheit rückgewonnen worden ist, zu dem Kühlmittelkühler zu fördern;
ein Kühlmittelzufuhrrohr (36), das mit dem Auslass des Kühlmittelkühlers (34) und mit der Wasserrückgewinnungseinheit (32) verbunden ist, um das Rückgewinnungswasser, das durch den Kühlmittelkühler gekühlt worden ist, als das Kühlwasser der Wasserrückgewinnungseinheit zuzuführen; und
eine Kühlmittel-Zufuhrpumpe (37), die in dem Rückgewinnungswasser-Förderrohr (35) vorgesehen ist, um das Rückgewinnungswasser, das durch die Wasserrückgewinnungseinheit (32) rückgewonnen worden ist, an den Kühlmittelkühler (34) zu fördern und das Rückgewinnungswasser der Wasserrückgewinnungseinheit zuzuführen; und
wobei das Heizmediumsystem (42; 42A) Folgendes umfasst:
ein Heizmedium-Zufuhrrohr (43), das mit einem Abschnitt des Rückgewinnungswasser-Zufuhrrohrs (35) auf einer Förderseite der Kühlmittelzufuhrpumpe (37) und mit dem Einlass des Abgaswiedererhitzers (41) verbunden ist, um einen Teil des Rückgewinnungswassers, das durch die Wasserrückgewinnungseinheit (32) rückgewonnen worden ist, dem Abgaswiedererhitzer zuzuführen; und
ein Heizmedium-Rückleitungsrohr (44), das mit einem Abschnitt des Rückgewinnungswasser-Förderrohrs (35) auf einer Saugseite der Kühlmittelzufuhrpumpe (37) und mit dem Auslass des Abgaswiedererhitzers (41) verbunden ist, um das Rückgewinnungswasser, das dem Abgaswiedererhitzer zugeführt worden ist, zu dem Rückgewinnungswasser-Förderrohr zurückzuleiten.

3. Abgasbehandlungssystem für das fortschrittliche Feuchtluft-Turbinensystem nach Anspruch 1,
wobei die Wasserrückgewinnungseinheit (32B) einen Wärmetauscher (32d) enthält, um zwischen dem als das Kühlmittel dienenden Kühlwasser und dem Abgas Wärme auszutauschen, und die konfiguriert ist, die Feuchtigkeit, die in dem Abgas enthalten ist, und das Kühlwasser, das mit dem Abgas Wärme ausgetauscht hat, als Rückgewinnungswasser rückzugewinnen;
wobei das Kühlmittelumwälzsystem (33B) Folgendes umfasst:
einen Kühlmittelkühler (34) zum Kühlen des Rückgewinnungswassers, das durch die Wasserrückgewinnungseinheit (32B) rückgewonnen worden ist;
ein Rückgewinnungswasser-Förderrohr (39), das mit der Wasserrückgewinnungseinheit (32B) und mit dem Einlass des Kühlmittelkühlers (34) verbunden ist, um das Rückgewinnungswasser, das durch die Wasserrückgewinnungseinheit rückgewonnen worden ist, zu dem Kühlmittelkühler zu fördern;
ein Kühlmittel-Zufuhrrohr (36B), das mit dem Auslass des Kühlmittelkühlers (34) und mit dem Einlass des Wärmetauschers (32d) verbunden ist, um das Rückgewinnungswasser, das durch den Kühlmittelkühler gekühlt worden ist, als das Kühlwasser dem Wärmetauscher zuzuführen;
ein Kühlmittel-Rückleitungsrohr (38), das mit dem Auslass des Wärmetauschers (32d) und mit der Wasserrückgewinnungseinheit (32B) verbunden ist, um das Rückgewinnungswasser, das Wärme mit dem Abgas in dem Wärmetauscher ausgetauscht hat, in die Wasserrückgewinnungseinheit zurückzuleiten; und
eine Kühlmittel-Zufuhrpumpe (37), die in dem Rückgewinnungswasser-Förderrohr (35) vorgesehen ist, um das Rückgewinnungswasser, das durch die Wasserrückgewinnungseinheit (32) rückgewonnen worden ist, zu dem Kühlmittelkühler (34) zu fördern und das Rückgewinnungswasser dem Wärmetauscher (32d) zuzuführen; und
wobei das Wärmemediumsystem (42B) Folgendes umfasst:
ein Wärmemedium-Zufuhrrohr (43B), das mit dem Kühlmittel-Rückleitungsrohr (38) und mit dem Einlass des Abgaswiedererhitzers (41) verbunden ist, um einen Teil des Kühlwassers, das mit dem Abgas in dem Wärmetauscher (32d) Wärme ausgetauscht hat, dem Abgaswiedererhitzer zuzuführen; und
ein Wärmemedium-Rückleitungsrohr (44), das mit einem Abschnitt des Rückgewinnungswasser-Förderrohrs (35) auf einer Saugseite der Kühlmittel-Zufuhrpumpe (37) und mit dem Auslass des Abgaswiedererhitzers (41) verbunden ist, um das Kühlwasser, das dem Abgaswiedererhitzer zugeführt worden ist, zu dem Rückgewinnungswasser-Förderrohr zurückzuleiten.

4. Abgasbehandlungssystem für das fortschrittliche Feuchtluft-Turbinensystem nach einem der Ansprüche 1 bis 3, das ferner Folgendes umfasst:
ein Durchflussmengenregulierungsventil (45), das in dem Wärmemediumsystem (42A) vorgesehen ist, um eine Durchflussmenge des Wärmemediums, das dem Abgaswiedererhitzer (41) zuzuführen ist, zu regulieren.

5. Fortschrittliches Feuchtluft-Turbinensystem, das das Abgasbehandlungssystem (3; 3A; 3B) nach wenigstens einem der Ansprüche 1 bis 4 umfasst.

## Revendications

1. Système de traitement de gaz d'échappement destiné à un système avancé de turbine à air humide, permettant de traiter une humidité contenue dans un gaz d'échappement évacué depuis un système de turbine à gaz (1) dans lequel un fluide de travail est humidifié, le système de gaz d'échappement comprenant :
une unité de récupération d'eau (32 ; 32B) permettant de récupérer l'humidité contenue dans le gaz d'échappement en refroidissant au moyen d'un fluide réfrigérant le gaz d'échappement évacué depuis le système de turbine à gaz (1) ;
un réchauffeur de gaz d'échappement (41) disposé en aval de l'unité de récupération d'eau (32 ; 32B) par rapport au flux de gaz d'échappement, permettant de réchauffer au moyen d'un fluide caloporteur le gaz d'échappement qui a traversé l'unité de récupération d'eau ; et
un système de circulation de réfrigérant (33 ;33B) permettant d'amener vers l'unité de récupération d'eau le fluide réfrigérant ayant échangé de la chaleur avec le gaz d'échappement dans l'unité de récupération d'eau (32 ; 32B) en tant que fluide réfrigérant,
**caractérisé en ce que** le système de traitement de gaz d'échappement comprend en outre
un système de fluide caloporteur (42 ; 42A ; 42B) raccordé au réchauffeur de gaz d'échappement (41) et au système de circulation de réfrigérant (33 ; 33B), permettant d'amener vers le réchauffeur de gaz d'échappement une partie du fluide réfrigérant ayant échangé de la chaleur avec le gaz d'échappement dans l'unité de récupération d'eau (32 ; 32B) en tant que fluide caloporteur, et de ramener le fluide réfrigérant vers le système de circulation de réfrigérant, dans lequel
le fluide réfrigérant ayant échangé de la chaleur avec le gaz d'échappement dans l'unité de récupération d'eau (32 ; 32B) est utilisé en tant que fluide caloporteur pour le réchauffeur de gaz d'échappement (41).

2. Système de traitement de gaz d'échappement destiné à un système avancé de turbine à air humide selon la revendication 1,
dans lequel l'unité de récupération d'eau (32) est configurée de manière à refroidir le gaz d'échappement par contact gaz/liquide en pulvérisant une eau de refroidissement en tant que fluide réfrigérant, et à récupérer l'humidité contenue dans le gaz d'échappement et l'eau de refroidissement pulvérisée en tant qu'eau de récupération ;
dans lequel le système de circulation de réfrigérant (33) comprend :
un refroidisseur de fluide réfrigérant (34) permettant de refroidir l'eau de récupération qui a été récupérée par l'unité de récupération d'eau (32) ;
un tuyau de refoulement de l'eau de récupération (35) raccordé à l'unité d'eau de récupération (32) et à l'entrée du refroidisseur de fluide réfrigérant (34), permettant de refouler vers le refroidisseur de fluide réfrigérant l'eau de récupération qui a été récupérée par l'unité de récupération d'eau ;
un tuyau d'alimentation en fluide réfrigérant (36) raccordé à la sortie du refroidisseur de fluide réfrigérant (34) et à l'unité de récupération d'eau (32), permettant d'amener vers l'unité de récupération d'eau l'eau de récupération qui a été refroidie par le refroidisseur de fluide réfrigérant en tant qu'eau de refroidissement ; et
une pompe d'alimentation en fluide réfrigérant (37) prévue dans le tuyau de refoulement de l'eau de récupération (35), permettant de refouler vers le refroidisseur de fluide réfrigérant (34) l'eau de récupération qui a été récupérée par l'unité de récupération d'eau (32), et d'amener l'eau de récupération vers l'unité de récupération d'eau ; et
dans lequel le système de fluide caloporteur (42 ; 42A) comprend :
un tuyau d'alimentation en fluide caloporteur (43) raccordé à une portion du tuyau de refoulement de l'eau de récupération (35) sur un côté refoulement de la pompe d'alimentation en fluide réfrigérant (37) et à l'entrée du réchauffeur de gaz d'échappement (41), permettant d'amener vers le réchauffeur de gaz d'échappement une partie de l'eau de récupération qui a été récupérée par l'unité de récupération d'eau (32) ; et
un tuyau de retour du fluide caloporteur (44) raccordé à une portion du tuyau de refoulement de l'eau de récupération (35) sur un côté aspiration de la pompe d'alimentation en fluide réfrigérant (37) et à la sortie du réchauffeur de gaz d'échappement (41), permettant de ramener vers le tuyau de refoulement de l'eau de récupération l'eau qui a été amenée vers le réchauffeur de gaz d'échappement.

3. Système de traitement de gaz d'échappement destiné à un système avancé de turbine à air humide selon la revendication 1,
dans lequel l'unité de récupération d'eau (32B) inclut un échangeur de chaleur (32d) permettant d'échanger la chaleur entre l'eau de refroidissement en tant que fluide réfrigérant et le gaz d'échappement, et est configurée de manière à récupérer sous forme d'eau de récupération l'humidité contenue dans le gaz d'échappement et l'eau de refroidissement ayant échangé de la chaleur avec le gaz d'échappement ;
dans lequel le système de circulation de réfrigérant (33B) comprend :
un refroidisseur de fluide réfrigérant (34) permettant de refroidir l'eau de récupération qui a été récupérée par l'unité de récupération d'eau (32B) ;
un tuyau de refoulement de l'eau de récupération (35) raccordé à l'unité de récupération d'eau (32B) et à l'entrée du refroidisseur de fluide réfrigérant (34), permettant de refouler vers le refroidisseur de fluide réfrigérant l'eau de récupération qui a été récupérée par l'unité de récupération d'eau ;
un tuyau d'alimentation en fluide réfrigérant (36B) raccordé à la sortie du refroidisseur de fluide réfrigérant (34) et à l'entrée de l'échangeur de chaleur (32d), permettant d'amener vers l'échangeur de chaleur l'eau de récupération qui a été refroidie par le refroidisseur de fluide réfrigérant en tant qu'eau de refroidissement ;
un tuyau de retour du fluide réfrigérant (38) raccordé à la sortie de l'échangeur de chaleur (32d) et à l'unité de récupération d'eau (32B), permettant de ramener dans l'unité de récupération d'eau l'eau de récupération ayant échangé de la chaleur avec le gaz d'échappement dans l'échangeur de chaleur ; et
une pompe d'alimentation en fluide réfrigérant (37) prévue dans le tuyau de refoulement de l'eau de récupération (35), permettant de refouler vers le refroidisseur de fluide réfrigérant (34) l'eau de récupération qui a été récupérée par l'unité de récupération d'eau (32B), et d'amener l'eau de récupération vers l'échangeur de chaleur ; et
dans lequel le système de fluide caloporteur (42B) comprend :
un tuyau d'alimentation en fluide caloporteur (43B) raccordé au tuyau de retour du fluide réfrigérant (38) et à l'entrée du réchauffeur de gaz d'échappement (41), permettant d'amener vers le réchauffeur de gaz d'échappement une partie de l'eau de refroidissement ayant échangé de la chaleur avec le gaz d'échappement dans l'échangeur de chaleur (32d) ; et
un tuyau de retour du fluide caloporteur (44) raccordé à une portion du tuyau de refoulement de l'eau de récupération (35) sur un côté aspiration de la pompe d'alimentation en fluide réfrigérant (37) et à la sortie du réchauffeur de gaz d'échappement (41), permettant de ramener vers le tuyau de refoulement de l'eau de récupération l'eau de refroidissement qui a été amenée vers le réchauffeur de gaz d'échappement.

4. Système de traitement de gaz d'échappement destiné à un système avancé de turbine à air humide selon l'une quelconque des revendications 1 à 3, comprenant en outre :
une vanne de régulation de débit (45) prévue dans le système de fluide caloporteur (42A), permettant de réguler un débit du fluide caloporteur devant être amené au réchauffeur de gaz d'échappement (41).

5. Système avancé de turbine à air humide comprenant :
le système de traitement de gaz d'échappement (3 ; 3A ; 3B) selon l'une au moins des revendications 1 à 4.
